# EUROPEAN PATENT APPLICATION

(11) **EP 0 757 128 A2**
(43) Date of publication of application: **05.02.1997**
(21) Application number: 96112081.3
(22) Date of filing: 26.07.1996
(51) Int. Cl.: D05B 23/00, F16H 37/12

(54) **Mechanical device suitable for changing a rotary motion into a motion according to a curvilinear outline, in particular an elliptical outline**

(30) Priority: 31.07.1995 IT MI951679
(71) Applicant: Bellan, Vianzino, 21010 Castelveccana (Varese) (IT)
(72) Inventor: Bellan, Vianzino, 21010 Castelveccana (Varese) (IT)
(74) Representative: Gervasi, Gemma, Dr.

(57) **Abstract**

The invention refers to a mechanical device suitable for changing a rotary motion into a motion according to an elliptical outline (or to a different closed prefixed outline): said mechanical device, when installed into an automatic machine for assembling and sewing to a carrier a circular wedge, makes said machine suitable for sewing to said carrier a wedge of different shape, for example an elliptical wedge.

The present mechanical device is very useful for the production of stockings of "tights" type.

## Description

### Field of the invention

The present invention refers to a very simple mechanical device suitable for changing a rotary motion to a motion according to a closed curvilinear outline, preferably but not necessarly elliptical.

Said mechanical device, when installed into a known automatic machine used for the production of stockings (and in particular of "tights") for sewing to said stockings a circular wedge, makes said machine suitable for sewing to said stockings a wedge of different shape, for example an elliptical wedge.

No important modification to said known machine is needed.

### Prior art

Stockings of "tights" type and other similar shaped clothes (referred to as a whole on the present description as "tights") are very common clothes, whose production involves economical interests which are often important: for cutting as much as possible the production costs, automatic machines are used, if possible.

Tights include two "legs" (i.e tubular elements closed at one end) and "knickers", realised by sewing two or more parts together, to which the "legs" are connected, said "knickers" being provided with means (which are generally elastic means) suitable for supporting the tights when worn.

Methods and apparatuses used on the relevant manufacturing industry for realising and assembling the parts of the tights will not be described here as they are well known in the art and unrelated to the present invention.

The finished tights are generally well-finished by putting on a reinforcing or protective wedge to the "crutch" of the tights "knickers", said wedge being of the same material as the tights or of a different one (for example: cotton cloth).

On the market automatic machines are known and available (for example, the machine SOLIS model 11 made by the firm Solis S.r.l.) capable of performing the following operations: collecting and positioning on a carrier the tights to be well-finished; collecting a cloth portion not smaller than the wedge to be put on and properly positioning said cloth portion on the tights where needed; blocking (for example through a pressing body) said wedge to said tights before conveying them to a sewing station and finally trimming the wedge to remove cloth parts exceeding the wedge outline.

The mechanical elements of said machines and the steps of their fully automatic production processes will not be further described here as they are well known in the art and unrelated to the present invention: it has be only pointed out that the sewing step of the above automatic machines is similar to that of a traditional sewing machine, the most relevant difference being that in traditional sewing machines the clothes to be sewn are handled by the operator, while in the above automatic machines the tights and the wedge to be assembled are moved by known mechanical means to be conveyed to the sewing and trimming station.

However, automatic machines already known can only sew circular wedges, which are normally disliked by the tights buyers. To meet the public's requirements and improve the tights "wearability", the producers of tights are more and more using lengthened wedges as, for example, wedges with rhomboidal, elliptical or anatomic shape. The problem of sewing lengthened wedges by an automatic machine is very important for the relevant manufacturing industry and up to now did not received a technically and economically effective answer: automatic machines are on the market automatic machines (for example, the machine model GLC made by the Japanese firm Takatori K.K.) which are suitable for sewing rhomboidal wedges through a succession of straight linear seams (which increase the manufacturing time and, as a consequence, cut the productivity), but said machines are very complicated and expensive, they are not very reliable and, above all, they are not suitable for sewing elliptical (or in any way curvilinear closed-shaped) wedges.

At present, elliptical (or in any way curvilinear closed-shaped) wedges are sewn by hand, thus involving a not negligible increase of the manufacturing costs and a low productivity: both said facts increase the retail price of the final product.

The present invention refers to a simple and smalla sized mechanical device, suitable for changing a rotary motion into a motion according to a closed curvilinear outline preferably but non necessarly elliptical, solving therefore the technical problem of sewing by an automatic machine wedges with a not circular shape; another impoirtant aspect of the invention is the possibility of inserting the device into a known automatic machine apt to sew circular wedges, without involving important modifications to the known machine.

### Summary of the invention

The present invention refers to a mechanical device suitable for changing a rotary motion into a motion according to a closed curvilinear outline, preferably an elliptical one, comprising in combination the following elements:
- a first pin, wheeled by operating means;
- a second pin, parallel to the first one to which it is mechanically connected;
- first support means, carrying the first and the second pin and means mechanically connecting them one to other: the first and the second pin extending below the first support means;
- a first sleeve, made of vulcanised rubber or another equivalent material, strictly connected to the extension of the first pin below the first support;
- a second sleeve, made of vulcanised rubber or another equivalent material, strictly connected to the extension of the second pin below the first support: the external surfaces of said sleeves have a prefixed distance and the same speed, hereinafter called tip-speed;
- a hollow body, whose external surface has the above mentioned closed curvilinear outline, which comprises at one end a constant thickness portion inserted between the first and second sleeve, the thickness of said constant thickness portion corresponding to the prefixed distance between the external surfaces of said first and second sleeve: the hollow body is frictionally moved by the first and second sleeve, according to an orbital motion on a plane perpendicular to the first and second pin, such motion corresponding to the outline of the external surface of the hollow body;
- second support means, strictly connected to the first support means, supporting the hollow body during its orbital moving. When a mechanical device according to the invention is inserted into an above disclosed automatic machine, apt to sew a wedge on tights:
- the tights are positioned in the hollow body belonging to said mechanical device;
- the first pin is mechanically connected to a driving shaft belonging to the automatic machine;
- the outline of the external surface of the hollow body corresponds to the wedge outline, while the sizes of the the hollow body end contacting the cloth portion correspond to those of said wedge;
- a flat body, belonging to the automatic machine, exerts a pressure on the hollow body end contacting the cloth portion, thus locking the cloth portion to the tights;
- due to the pressure exerted by the flat body on the hollow body end contacting the cloth portion, the tights and the cloth portion slide at the same time on the flat body, following in its orbital motion the hollow body end contacting the cloth portion;
- the preferred position of the sewing means is at the contact point (hereinafter called pitch point) of the external surface of the second sleeve and the external surface of the constant thickness portion of the hollow body, or at the pitch point of the external surface of the first sleeve and of the internal surface of the constant thickness portion of the hollow body.

### Brief description of the drawings

The enclosed drawings show a not limiting embodiment of a mechanical device according to the invention which, when inserted into a known automatic machine for sewing a wedge on tights, makes said machine suitable for sewing an elliptical wedge on said tights. In particular:
- figure 1 shows a sectional view of the device, made according to section plan A-A of figure 2: in figure 1 are shown the tights 1 put on the hollow body 5, the cloth portion 3 sewn to tights 1 and then trimmed (if necessary) to realise the wedge 2 and a flat body 4, belonging to the automatic machine, whose vertical displacement locks the cloth portion 3 to the portion of the tights 1 put on the hollow body 5;
- figure 2 shows a sectional view of the device, made according to section plan C-C of figure 1;
- figure 3 shows a partial sectional view of the device, made according to section plan D-D of figure 2, which is perpendicular to section plane A-A;
- figure 4 shows a sectional view of the device, made according to section plan E-E of figure 3;
- figures 5 and 6 show, respectively, a partial sectional lateral view and a partial top view of known means, modified to be used in combination with the present invention and suitable for detaching from the hollow body 5 the tights 1 to remove parts, if any, of the cloth portion 3 exceeding the outline of said wedge 2.

### Detailed description of the drawings

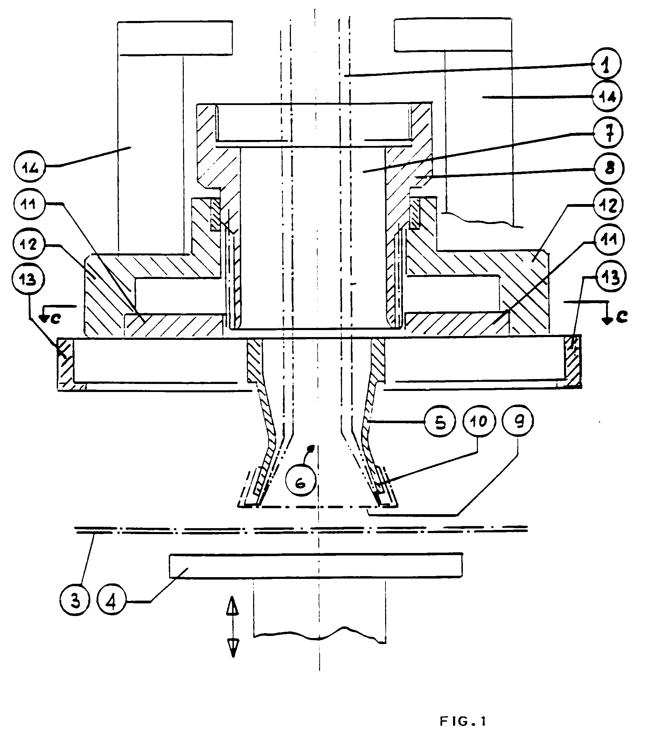

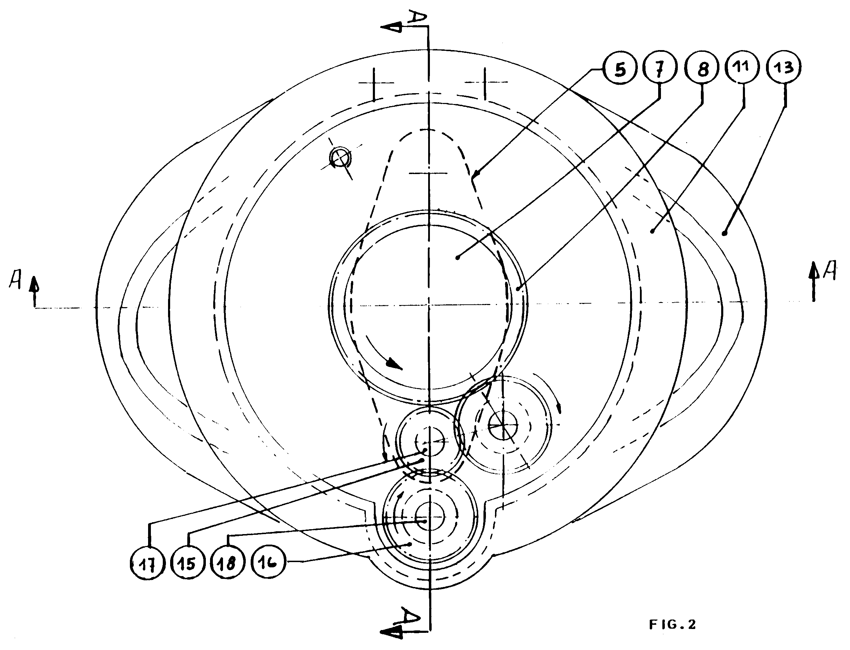

Figure 1 shows a sectional view, made according to section plan A-A of figure 2 of a device according to the invention inserted into an automatic machine apt to sew on tights 1 an elliptical wedge 2 made from a cloth portion 3 (in figure 1, from a portion of tape): the flat body 4, belonging to the automatic machine and displacing vertically, locks the cloth portion 3 to the tights 1 on the lower lip 10 of the hollow body 5, according to the invention, which is the tights support means of said automatic machine.

In figure 1 the tights 1 atre shown in the position for sewing the wedge 2 (not shown in the figures): to this purpose the "legs" of the tights 1 have been taken into the hole 6 of the hollow body 5 and into the hole 7 made inside the toothed sleeve 8 connected to a driving shaft (not shown in the figures) belonging to the automatic machine, the tights have been turned over and put on the lower lip 10 of the hollow body 5 where the "knickers" 9 are also placed: an upward displacement of the flat body 4 belonging to the automatic machine locks the cloth portion 3 and the tights 1 to the lower lip 10 of the hollow body 5 exerting such a pressure to allow the lower lip 10 of the hollow body 5 to transfer its orbital motion to the cloth portion 3 and to the tights 1.

Means and proceedings used by the automatic machine for arranging tights 1 and cloth portion 3 as shown in figure 1 will not be described here as they are well known in the art and unrelated to the present invention.

Tights 1, cloth portion 3 and flat body 4 will not be shown in the following figures for the sake of graphic representation simplicity.

The operating means of the hollow body 5, driven by the toothed sleeve 8, will be described in the following figures 2 to 4; in figure 1 the support means of said operating means (in the following: the first support means) are labelled as 11, the protecting cover of the driving means is labelled as 12, the support means of the hollow body 5 (in the following: the second support means) is labelled as 13 and the means fixing to the automatic machine the device according to the invention to the automatic machine is labelled as 14.

It is evident that, to install a device according to the invention into a known automatic machine, it is enough to replace the tights support means already present in said known machine with the device according to the invention and to make, if necessary, simple mechanical tuning operations as, for example, by adjusting the displacement of the flat body 4.

Said easiness of installation is an useful feature of the mechanical device according to the invention

Figure 2 shows a sectional view of the device, made according to section plan C-C of figure 1: in the figure it is possible to see the first support means 11, the second support means 13 (partially hid by the first support means 11) and a kinematic chain [including at least a pair of constantly engaged gears 15, 16 fitted on a first pin 17, respectively on a second pin 18] mechanically coupling the toothed sleeve 8 to said first and second pin 17, 18, which are perpendicular to said first support means 11.

Figure 2 shows the first support means 11 having a first and a second axis of symmetry, perpendicular one to other, the first axis of symmetry being longer then the second one; the centres of the first and second pin 17, 18 belong to the second axis of symmetry and the distance of the first pin 17 from the first axis of symmetry is smaller then the distance of the second pin 18 from the first axis of symmetry.

The first and second pin, coupled one to other, rotate in opposite directions, as shown by the arrows near the gears 15 and 16. The kinematic chain of figure 2 includes a third gear; anyhow, without extending beyond the scope of the invention, one can modify the number and the size of possible further gears in order to modify the direction of rotation (in the same or in the opposite direction) and the gear ratio between the toothed sleeve 8 and the first pin 17, according to the specific use of the mechanical device.

Without going beyond the scope of the invention, one or more belts can be used in place of the kinematic chain coupling the sleeve 8 to the first and second pin 17, 18, provided that the first and second pin 17, 18 always rotate in opposite directions.

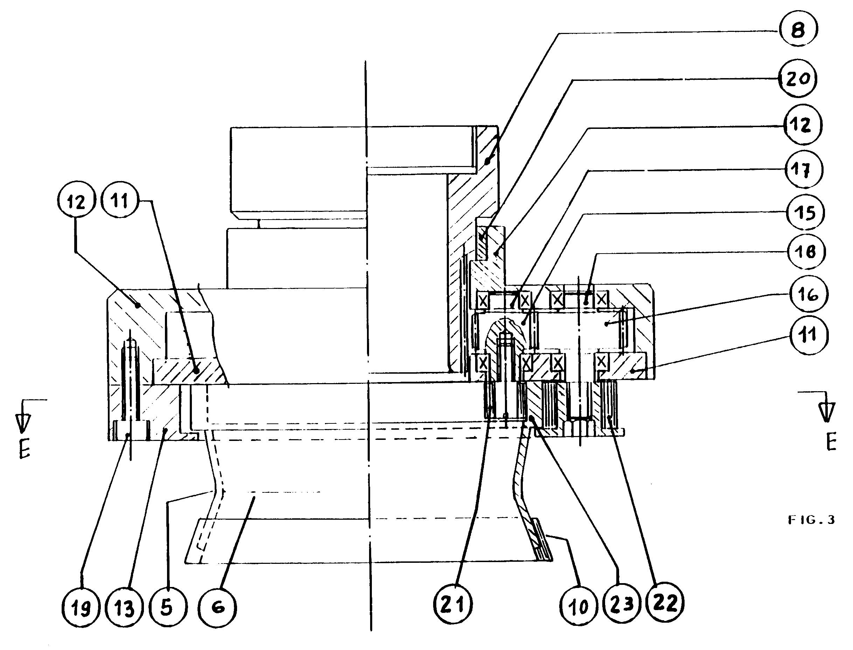

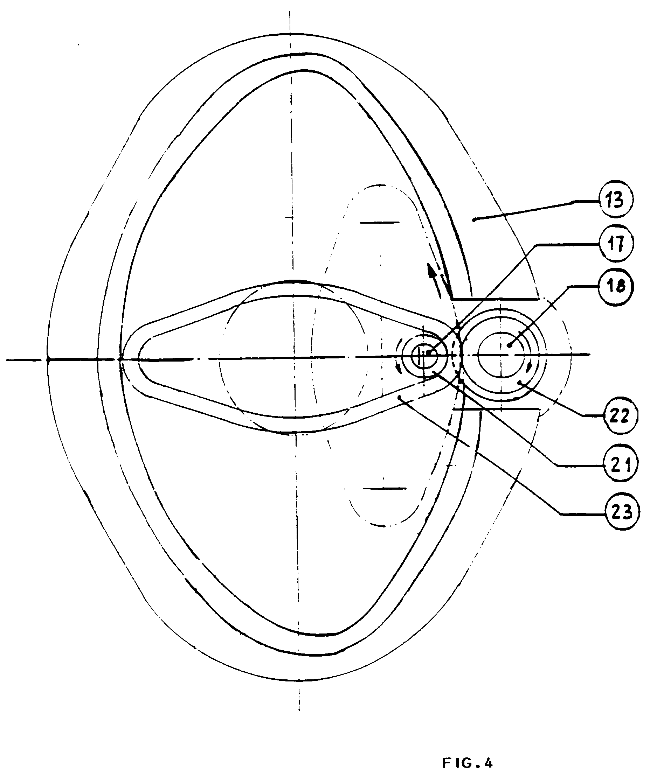

Furthermore, the hollow body 5 (shown in figures 3 and 4) is represented by dotted lines in figure 2, since it cannot be seen being placed on the other side of the first support means 11.

The right portion of figure 3 shows a partial sectional view of the device made according to section plan D-D of figure 2, while the left portion of figure 3 shows a sectional view of the device to show the means (in figure 3: a bolt 19) connecting the first support means 11 to the second support means 13 through the cover 12.

The partial sectional view of the device shown on the right portion of figure 3 shows the toothed sleeve 8 (assembled through a bush 20 or through different means) and the gears 15, 16 fitted, respectively, on the first and on the second pin 17, 18 extending below the first support means 11: to the extension of the first pin 17 is assembled a first sleeve 21, to the extension of the second pin 18 is assembled a second sleeve 22.

The sleeves 21 and 22 (which are preferably cylinders) are made of vulcanised rubber or an equivalent material with a high friction factor.

The external surfaces of the sleeves 21, 22 have a prefixed distance, corresponding to the thickness of the constant thickness portion 23 of the hollow body 5 which (as shown in figure 4) is inserted between sleeves 21 and 22, which move by friction the hollow body 5.

On a device according to the invention the sleeves 21 and 22 (which are in contact with the portion 23 of the hollow body 5) have the same tip speed to avoid that one of the sleeves 21, 22 slides on the portion 23 of the hollow body 5, involving a lot of unwelcome effects as a power loss by heat, an abnormal wear of sleeves 21, 22 and so on.

It is an easy goal for a skilled man to equalise the tip speeds of the sleeves 21 and 22 by suitably designing the gears 15, 16 fitted on pins 17 and 18 and/or the thickness of the sleeves 21, 22 assembled to the extensions of said pins: any further disclosure about the design of said gears 15, 16 and/or of said sleeves 21, 22 is therefore unnecessary.

Finally, it is pointed out that on the preferred embodiment shown in figures 1 and 3 the hollow body 5 is double truncated-cone shaped or in any case that its sizes vary according to the variation of the distance from the constant thickness portion 23; moreover, without going beyond the scope of the invention the hollow body can be a cylindrical body, i.e. the sizes of the hollow body 5 can be the same on the whole body height.

In any case, the hollow body 5 must have the following characterising features:
- the outline of its external surface is the same as that of the wedge 2 to be sewn to the tights 1;
- due to its constant thickness portion 23 inserted between sleeves 21 and 22, the hollow body 5 makes an orbital movtion corresponding to the outline of its external surface;
- the sizes of its lower lip 10, moving the tights 1 and the cloth portion 3 according to said orbital motion, are corresponding to those of the wedge 2 to sewn on the tights 1.

On the embodiment here disclosed the external surface of the hollow body 5 has an elliptical shape but, without going beyond the scope of the invention, the external surface of the hollow body 5 can have an anatomic shape or another different shape, at least partially curvilinear, considered advantageous depending on the specific uses of a device according to the invention.

Figure 4 shows a sectional view of the device, made according to section plan E-E of figure 3; in figure 4 only the device elements suitable for a better understanding of the device working are shown. Figure 4 shows the second support means 13 and the constant thickness portion 23 of the hollow body 5 inserted between sleeves 21 and 22, respectively assembled to the extensions of said pins 17 and 18, respectively, and having the same tip speed: the directions of rotation of said sleeves 21 and 22 are shown by arrows.

Furthermore, figure 4 shows through dotted lines the position of the portion 23 of the hollow body 5 rotated of 90° with reference to the position shown by a continuous line, i.e. after a quarter of its orbital motion: one can note that the only fixed points (i.e. whose position does not change during the orbital motion of portion 23 of the hollow body) are the pitch points of the external surfaces of the portion 23 and of the second sleeve 22, and of the internal surface of the portion 23 and of the external surface of the first sleeve 21.

It is particularly suitable to place at said stationary points (in particular at the pitch points of the external surfaces of the portion 23 and of the second sleeve 22) means 24 (not shown in the figures) belonging to the automatic machine and apt to sew on tights 1 the wedge 2 by sewing to tights 1 the cloth portion 3 and by taking away cloth parts, if any, exceeding the outline of the wedge 2.

For the sake of graphic representation simplicity, other portions of the hollow body 5, and in particular the lower lip 10 whose orbital motion carries the tights 1 and the cloth portion 3 under said means 24 to allow a wedge 2 whose shapes and outline are corresponding to those of the lower lip 10 of the hollow body 5 to be sewn on the tights 1, are omitted in figure 4.

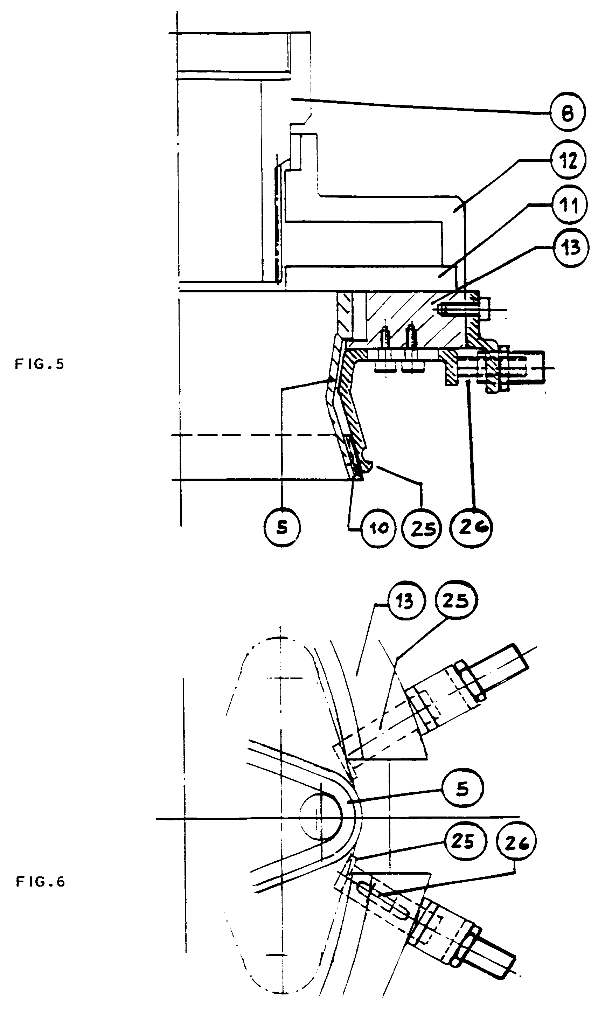

Figures 5 and 6 show, respectively, a partial sectional lateral view and a partial top view of known means, modified to be used together with the present invention and suitable for detaching from the hollow body 5 the tights 1 and to remove parts, if any, of the cloth portion 3 exceeding the said wedge outline.

On a known automatic machine suitable for sewing a circular wedge, close to the sewing means 24 at least one arm 25 is provided, which adheres to the wedge support body and detaches the tights from the hollow body to allow that cloth portions, if any, exceeding the wedge outline are removed in a manner not described here as known in the art; since the support body is circular, at least one arm is connected to the machine casing.

On an automatic machine including a device according to the invention the support body of tights 1 is the hollow body 5 having a not circular outline: to allow an arm 25 to adhere to the hollow body 5 following its outline, as shown in figure 5, said arm is assembled to a support connected to the second support means 13 and including elastic means 26, realised preferably by one or more springs: the arm 25 can move while always remaining adherent to hollow body 5 and following its outline.

The top view of figure 6 shows two arms 25 carried by supports including elastic means 26 and adherent to the external outline of the hollow body 5.

Without going beyond the scope of the invention, an automatic machine including a mechanical device according to the invention can be used for sewing according to closed outlines different from an elliptical one, for example for sewing elastic supporting and fixing means along the edges of so-called "foot-straps": to this purpose, the elliptically-shaped hollow body 5 shown in the figures must be replaced by a different hollow body 5, so shaped to be suitable for the above use.

Always without going beyond the scope of the invention it is possible for a skilled man made to the above described mechanical device all modifications and improvements suggested by the normal experience and by the normal development of the art.

## Claims

1. Mechanical device suitable for changing a rotary motion to a motion according to a closed curvilinear outline, in particular to an elliptical outline, characterised by comprising the following elements combined one to another:
- a first pin (17), wheeled by operating means;
- a second pin (18), parallel to the first one (17) to which it is mechanically connected;
- first support means (11), carrying said first and second pin (17, 18) and means mechanically connecting one to other said first and second pin (17, 18), said first and second pin (17, 18) extending below said first support means (11);
- a first sleeve (21), made of a material with a high friction factor and strictly assembled to the extension of said first pin (17) below said first support means (11);
- a second sleeve (22), made of a material with a high friction factor and strictly assembled to the extension of said second pin (18) below said first support means (11), the external surfaces of said first and second sleeve (21, 22) having a prefixed distance, said first and second sleeve (21, 22) having the same tip speed;
- a hollow body (5), chose external surface has said close curvilinear outline, said hollow body (5) comprising at one end a constant thickness portion (23) inserted between the first and the second sleeve (21, 22), the thickness of said constant thickness portion (23) corresponding to said prefixed distance between the external surfaces of said first and second sleeve (21, 22), said hollow body (5) being moved by friction by said first and second sleeve (21, 22) and making in a plane perpendicular to said first and to the second pin (17, 18) an orbital moving corresponding to said outline of said external surface of said hollow body (5);
- second support means (13), strictly connected to said first support means (11), supporting said hollow body (5) during said orbital moving.

2. Mechanical device according to claim 1, characterised in that said first support means (11) have a first and a second axis of symmetry, perpendicular one to other, said first axis of symmetry being longer then said second one, the centres of said first and second pin (17, 18) belong to said second axis of symmetry and the distance between said first pin (17) and said first axis of symmetry is smaller then the distance between said second pin (18) and said first axis of symmetry.

3. Mechanical device according to claim 1, characterised in that said closed curvilinear outline is an elliptical outline.

4. Mechanical device according to claim 1, characterised in that said first and second sleeve (21, 22) are made of vulcanised rubber.

5. Mechanical device according to claim 1, characterised in that said first and second sleeve (21, 22) have cylinder shape.

6. Mechanical device according to claim 1, characterised in that the sizes of said hollow body (5), whose external surface has said close curvilinear outline, are continuously varying according to the variation of the distance from said constant thickness portion (23).

7. Mechanical device according to claim 1, characterised in that said hollow body (5) is a cylindrical body, the sizes of said hollow body (5) being the same along the whole body height.

8. Mechanical device according to claim 2, installed into an automatic machine suitable for sewing a wedge on tights and including at least means suitable for collecting and positioning said tights on a support body, means suitable for collecting and positioning a cloth portion not smaller than said wedge on a prefixed position of said tights already positioned on said support body, a flat body suitable for blocking said cloth portion and said tights against said support body and means suitable for sewing said cloth portion to said tights and for removing cloth parts, if any, exceeding the outline of said wedge, characterised in that:
- said hollow body (5) suitable for such orbital moving forms said tights support body;
- said first pin (17) is mechanically connected to a toothed sleeve (8) which in turn is connected to a driving shaft belonging to said automatic machine;
- the outline of the external surface of said hollow body (5) is corresponding to said outline of said wedge (2) and the sizes of the end (10) of said hollow body (5) in contact with said cloth portion (3) correspond to those of said wedge (2);
- said flat body (4) exerts on said end (10) of said hollow body (5) a pressure suitable for locking said cloth portion (3) to said tights (1);
- due to said pressure put by said flat body (4) on said end (10) of said hollow body (5), said cloth portion (3) and said tights (1) slide at the same time on said flat body (4) following said end (10) of said hollow body (5) on its orbital motion;
- the preferred position of said sewing means (24) is at the pitch point of the external surface of said constant thickness portion (23) of said hollow body (5) and of the external surfaces of said second sleeve (22), or at the pitch point of the internal surface of said constant thickness portion (23) of the hollow body (5) and of the external surface of the said first sleeve (21).

9. Mechanical device according to claim 8, characterised in that said first pin (17) is mechanically coupled to said toothed sleeve (8) belonging to said automatic machine through a kinematic chain including at least a pair of constant mesh gears (15, 16) fitted, respectively, on said first and second pin (17, 18).

10. Mechanical device according to claim 8, characterised in that said first pin (17) is mechanically coupled to said toothed sleeve (8) through at least one transmission belt, said second pin (18) being moved by said at least one transmission belt.

11. Mechanical device according to claim 8, characterised in that said external surface of said hollow body (5) is elliptically shaped.

12. Mechanical device according to claim 8, characterised in that said external surface of said hollow body (5) is anatomically shaped.

13. Mechanical device according to claim 8, where said automatic machine includes detaching means adherent to said support body and suitable for detaching from said support body said tights, in order to remove possible parts of said cloth portion exceeding said wedge outline, characterised in that said detaching means (25) are assembled to supports including elastic means (26) suitable for maintaining said detaching means (25) always adherent to the external surface of said hollow body (5)

14. Mechanical device according to claim 13, characterised in that said elastic means includes at least a spring.
